# EUROPEAN PATENT APPLICATION

(11) **EP 2 334 104 A1**
(43) Date of publication of application: **15.06.2011**
(21) Application number: 10015532.4
(22) Date of filing: 10.12.2010
(51) Int. Cl.: H04W 4/02

(54) **Location-triggered alerts for mobile communication devices**

(30) Priority: 11.12.2009 US 636294
(71) Applicant: Cellco Partnership D/B/A Verizon Wireless, Basking Ridge, NJ 07920-1097 (US)
(72) Inventor: Sanjeev, Kumar, San Ramon, CA 94582 (US)
(74) Representative: Müller-Boré & Partner Patentanwälte

(57) **Abstract**

Requests to issue alerts may be stored in a central database. Each request may identify a mobile communication device and a location at which an alert is to be issued when the mobile communication device is at the location. Mobile communication devices may repeatedly report their current location to the central database. In response to each report, the database may queried to determine whether a current location matches one in the database for the reporting mobile communication device. If so, an alert may be issued. Various types of alerts are described.

## Description

### TECHNICAL FIELD

This disclosure relates alerts and to mobile communication devices.

### DESCRIPTION OF RELATED ART

Alerts can be helpful. For example, alerts can be helpful to remind - someone of a task that needs to be performed. An alert may be scheduled for a particular time on a particular day. However, a person may not always be available to perform the task when the alert is issued. That person may also have been available earlier, but may not have performed the task earlier because the person did not remember that he needed to do so.

A person may also wish to receive an alert in connection with the activity of another person. For example, a parent may ask a teacher to advise her when her son leaves school. However, it may not always be possible to obtain assistance to provide a desired alert. The person whom is being relied upon to provide the alert may also fail to do so.

### SUMMARY

A communication system may be configured to receive requests to issue alerts. Each request may include information identifying a mobile communication device and a location at which an alert is to be issued when the mobile communication device is at the location.

The communication system may be configured to receive reports from mobile communication devices. Each report may include information identifying the mobile communication device and the current location of the mobile communication device.

A memory system may be configured to store the alert request information in a database.

A processing system may be configured to receive the current location information, query the database in the memory system to determine whether the current location of the mobile communication device matches a location for the mobile communication device in the database, and direct the communication system to issue an alert if the query results in a match.

The communication system may be configured to receive alert requests from mobile communication devices, through a web interface, and/or through the public switched telephone network ("PSTN").

The alert information may be indicative of a street address, a latitude and longitude, and/or a name of the location.

The alert information may be indicative of a name which is associated with more than one location. The processing system may be configured to determine that there is a match in the database when the current location of a mobile communication device matches any of the locations associated with the name.

The processing system may be configured to determine that there is a match in the database when the current location of the mobile communication device is within a pre-determined distance of a location for the mobile communication device in the database.

The processing system may be configured to direct the communication system to issue an alert when a mobile communication device arrives at and/or leaves a location for the mobile communication device in the database.

The alert information may identify a set of mobile communication devices and a location at which an alert is to be issued when any of the mobile communication devices in the set are at the location.

The communication system may be configured to receive alert requests which include alert information specifying alert delivery information about each alert and issue alerts in accordance with the alert delivery information. The processing system may be configured to direct the communication system to issue each alert in accordance with the alert delivery information in the database for that alert.

The alert delivery information may specify delivering the alert to the mobile communication device which is the subject of the alert or to a device other than mobile communication device which is the subject of the alert.

The alert delivery information may specify delivering the alert audibly to a telephone number, as an e-mail, as a text message, and/or to multiple recipients.

The alert delivery information may specify delivering the alert in a manner which causes the alert to be posted to a communication system accessible to multiple persons.

The communication system may be configured to receive alert requests specifying multiple persons that are to be connected together when the alert is issued and to connect the multiple persons together.

The communication system may be configured to receive multiple alert requests for each mobile communication device. The memory system may be configured to store the alert request information associated with each in the database.

A mobile communication device may include a wireless communication system configured to wirelessly communicate with other communication systems, a location sensing system configured to sense the current location of the mobile communication device, and a processing system. The processing system may be configured to cause the wireless communication system to repeatedly deliver reports to an alert communication system for providing location-triggered alerts without user intervention between each location report. Each report may include information identifying the mobile communication device and the current location of the mobile communication device.

The processing system may be configured to cause the wireless communication system to deliver the location reports periodically and/or in response to changes in the current location.

The processing system may be configured to cause the wireless communication system to deliver alert requests to the alert communication system. Each alert request may include alert information identifying the mobile communication device and a location at which an alert is to be issued when the mobile communication device is at the location.

These, as well as other components, steps, features, objects, benefits, and advantages, will now become clear from a review of the following detailed description of illustrative embodiments, the accompanying drawings, and the claims.

### BRIEF DESCRIPTION OF DRAWINGS

The drawings disclose illustrative embodiments. They do not set forth all embodiments. Other embodiments may be used in addition or instead. Details that may be apparent or unnecessary may be omitted to save space or for more effective illustration. Conversely, some embodiments may be practiced without all of the details that are disclosed. When the same numeral appears in different drawings, it refers to the same or like components or steps.

FIG. 1 is a block diagram of an alert network which may be configured to deliver and receive requests for alerts when mobile communication devices are at specified locations, to deliver and receive reports about the current locations of the mobile communication devices, and to deliver and receive the alerts.

FIG. 2 is a block diagram of an alert communication system which may be configured to receive requests for alerts when mobile communication devices are at specified locations, to receive reports about the current locations of the mobile communication devices, and to deliver the alerts.

FIG. 3 is a block diagram of a mobile communication device which may be configured to deliver requests for alerts when the mobile communication device is at specified locations, to deliver reports about the current locations of the mobile communication device, and to receive the alerts.

FIG. 4 is a table of alert request information.

### DETAILED DESCRIPTION OF ILLUSTRATIVE EMBODIMENTS

Illustrative embodiments are now discussed. Other embodiments may be used in addition or instead. Details that may be apparent or unnecessary may be omitted to save space or for a more effective presentation. Conversely, some embodiments may be practiced without all of the details that are disclosed.

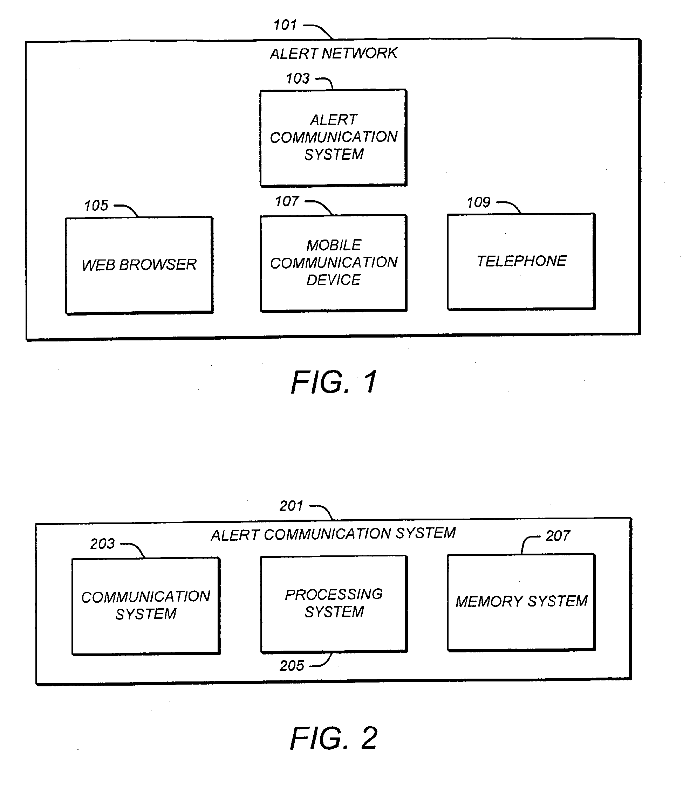

FIG. 1 is a block diagram of an alert network which may be configured to deliver and receive requests for alerts when mobile communication devices are at specified locations, to deliver and receive reports about the current locations of the mobile communication devices, and to deliver and receive the alerts. The alert network 101 may have additional or different components.

An alert communication system 103 may be configured to communicate with one or more web browsers, mobile communication devices, and telephones, such as a web browser 105, a mobile communication device 107, and/or a telephone 109.

Communication with the alert communication system 103 may be through any means or combination of means. For example, the communication between the mobile communication device 107 and the alert communication system 103 may be through a wireless data and/or voice communication link and/or the internet. Communication between the telephone 109 and the alert communication system 103 may be through the public switched telephone network ("PSTN") and the internet. Communication between the web browser 105 and the alert communication system 103 may be through the internet. One or more other types of communication channels may be used in addition or instead.

FIG. 2 is a block diagram of an alert communication system which may be configured to receive requests for alerts when mobile communication devices are at specified locations, to receive reports about the current locations of the mobile communication devices, and to deliver the alerts. The alert communication system 201 illustrated in Fig. 2 may be used as the alert communication system 103 illustrated in Fig. 1 or in any other type of alert network. Similarly, the alert communication system 103 in Fig. 1 may be different from the alert communication system 201 illustrated in Fig. 2.

As illustrated in Fig. 2, the alert communication system 201 may include a communication system 203, a processing system 205, and a memory system 207. The alert communication system 201 may have additional or different components.

The communication system 203 may be configured to receive requests to issue alerts. Each request may include alert information. The alert information may identify a mobile communication device and a location at which an alert is to be issued when the mobile communication device is at the location. The communication system may be configured to receive alert requests from one or more mobile communication devices, such as the mobile communication device 107, from web browsers, such as the web browser 105, from telephones, such as the telephone 109, and/or from any other source.

The communication system 203 may be configured to receive location reports from mobile communication devices, such as from the mobile communication device 107. Each location report may include current location information. The current location information may identify the mobile communication device and the current location of the mobile communication device.

The communication system 203 may be configured to issue alerts.

The communication system 203 may include hardware and software configured to perform the functions of the communication system 203 as described herein.

The memory system 207 may be configured to store the alert request information in a database. The memory system 207 may be of any type. For example, the memory system 207 may include one or more RAMs, ROMs, PROMS, ePROMs, flash memories, hard disks, DVDs, and/or CDs. The memory system 207 may be at the same location as the communication system 203 or at a different location. The memory system 207 may be at a single location or at multiple locations.

The database may be of any type. For example, the database may be a relational database which may be indexed to facilitate rapid searches.

The processing system 205 may be configured to receive current location information from mobile communication devices which is received by the communication system 203. The processing system 205 may be configured to query the database in the memory system 207 to determine whether the current location of a mobile communication device matches a location for the mobile communication device in the database. The processing system may be configured to direct the communication system 203 to issue an alert if the query results in a match.

The processing system may include hardware and software configured to perform the functions of the processing system described herein. The processing system may be at the same location as the communication system 203 and/or the memory system 207, or may be at a different location. The processing system 205 may be at a single location or at multiple locations.

The components of the alert communication system 201 may be at the same or different locations. The alert communication system 201 may be operated as one or more servers on the internet or in any other network configuration.

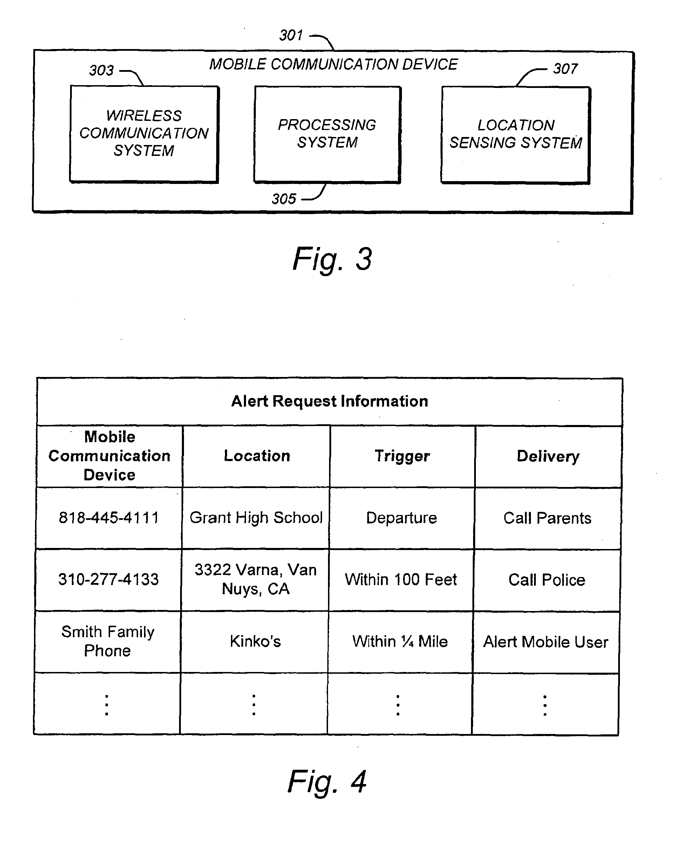

FIG. 3 is a block diagram of a mobile communication device which may be configured to deliver requests for alerts when the mobile communication device is at specified locations, to deliver reports about the current locations of the mobile communication device, and to receive the alerts.

The mobile communication device 301 illustrate in Fig. 3 may be used as the mobile communication device 107 illustrated in Fig. 1 or in any other alert network. Similarly, any other type of mobile communication device may be used as the mobile communication device 107.

The mobile communication device 301 may be of any type. For example, it may be a cell phone, a computer, a notebook, a wearable device such as a watch, or a device embedded in something that is mobile, such as a car radio.

The mobile communication device 301 may include a wireless communication system 303, a processing system 305, and a location sensing system 307. The mobile communication system 301 may have additional or different components.

The wireless communication system 303 may be of any type. It may be configured to enable the mobile communication device 301 to communicate wirelessly with one or more other communication systems, such as the alert communication system 103. The wireless communication system 303 may include a transmitter and a receiver to enable the mobile communication device 301 to communicate with cell sites. It may be in addition or instead enable the mobile communication device 301 to communicate over the internet and/or a wireless local area network. The wireless communication system 303 may be configured to communicate voice, data, and/or any other type of information over one or more of theses communication links.

The processing system 305 may be configured to cause the wireless communication system 303 to repeatedly deliver location reports to an alert communication system for providing location-triggered alerts, such as to the alert communication system 103. The processing system 305 may be configured to cause the wireless communication system 303 to repeatedly deliver the location reports without user intervention between each location report. The processing system 305 may be configured to cause the wireless communication system 303 to deliver the location reports periodically and/or in response to changes in the current location of the mobile communication device 301.

Each location report may include current location information. The current location information may identify the mobile communication device 301 and the current location of the mobile communication device 301.

The processing system 305 may be configured to cause the wireless communication system 303 to deliver alert requests to the alert communication system for providing location-triggered alerts, such as to the alert communication system 103. Each alert request may include alert information. The alert information may identify a mobile communication device, such as the mobile communication device 301, and a location at which an alert is to be issued when the mobile communication device is at the location. The processing system 305 may include hardware and software configured to perform the functions of the processing system 305 described herein.

The location sensing system 307 may be configured to sense the current location of the mobile communication device 301 and to provide this information to the processing system 305. The location sensing system 307 may include any type of device or devices to accomplish this purpose. For example, the location sensing system 307 may include a GPS receiver, triangulation technology, and/or an accelerometer. The location sensing system 307 may be configured to sense the location of the mobile communication device 301 on earth or within a smaller geographic area. The location sensing system 307 may be configured to determine the longitude, latitude, and/or the altitude of the mobile communication device 301.

FIG. 4 is a table of alert request information from several alert requests. As illustrated in Fig. 4, the alert request information may include a broad variety of information, such as information about the Mobile Communication Device, a Location to which it may be taken, a Trigger event for triggering an alert, and alert Delivery information. The table may be part of the database which is in the memory system 207. The fields of information may be different from those which have been described, both in terms of substance and format. For example, there may not be a "Trigger" and/or "Delivery" field of information.

The Mobile Communication Device which is being monitored may be specified in any way. A cell phone, for example, may be specified by its phone number. Other types of Mobile Communications Devices, for example, may be specified by an IP address, URL, and/or by any other type of identifying information.

The Mobile Communication Device may be indicative of a set of mobile communication devices, rather than a single device, as illustrated by "Smith Family Phone" in Fig. 4. The processing system 205 may be configured to cause an alert to be issued when any member of the set is at the indicated location. This may allow alerts to function for a user who chooses at different times to different mobile communication devices, such as a family member who takes a phone each day from a family pool of phones. In lieu of a family name, each mobile communication device in the family may be separately specified.

The alert information may identify the Location in any way. For example, the Location may be identified by a name, such as "Grant High School," as illustrated in Fig. 4. Similarly, the location may be specified by a street address, such "3322 Varna, Van Nuys, CA," as also illustrated in Fig. 4. The location may in addition or instead be indicated with a longitude, latitude, and/or altitude.

A name of a Location may be associated with more than a single location, such as when the name is of an organization which has operations at different locations. "Kinko's" in Fig. 4 is an example. The processing system 205 may be configured to determine that there is a match in the database in the memory system 207 when the current location of the mobile communication device matches any of the Locations in the memory for that device which are associated with the name. A group of locations that are associated with a single name may be specified in the memory by the single name, as illustrated in FIG. 4, and/or by each of the individual locations.

One or more other databases may be consulted by the processing system 205 for the purpose of determining the coordinates of a location which is specified in the table by means other than location coordinates. The location coordinates may in addition or instead be placed in the table. Location coordinates may be part of an alert request or looked up after receiving an alert request. Location coordinates which are part of a location report may instead or in addition be cross-referenced in one or more other databases to street and/or addresses.

Trigger information may be provided by specifying the relationship between the Location and the alert. For example, an alert request may specify that the alert is to be issued when the mobile communication device arrives at the location and/or leaves the location, the later being illustrated by the "Departure" Trigger in Fig. 4. The Trigger information may in addition or instead specify a pre-determined distance from the location at which the alert should be issued, such as the "Within 1,000 Feet" and the "Within 1/4 Mile" entries in Fig. 4. The processing system 205 may be configured to direct the communication system 203 to issue an alert when the mobile communication device 107 crosses the pre-determined distance from the Location which is specified in the Trigger. The processing system 205 may in addition or instead be pre-programmed with a default distance from the Location at which, in the absence of a different specification in an alert request, the alert is to be triggered. This pre-programmed distance may be subject to user modification.

As also illustrated in Fig. 4, alert requests may include Delivery information specifying information about how each alert should be delivered. The communication system 203, in turn, may be configured to receive this Delivery information and cause it to be stored in the database in the memory system 207. The processing system 205 may be configured to direct the communication system 203 to issue each alert in accordance with the alert delivery information in the database for that alert. The communication system 203 may be configured to issue alerts in accordance with the alert Delivery information.

The Delivery information may be of any type. For example, the Delivery information may specify that the alert is to be delivered to the mobile communication device which is the subject of the alert. Conversely, the Delivery information may specify that the alert is to be delivered to a device other than the mobile communication device. The Delivery information may specify that the alert is to be delivered over the public switched telephone network ("PSTN") to a telephone, as an email, and/or as a text message. The Delivery information may specify that an alert is to be delivered to multiple recipients, as illustrated by the example "Call Parents" in Fig. 4. The Delivery information may specify that the alert is to be delivered in a manner that causes the alert to be posted to a communication system which is accessible to multiple persons, such as to a blog and/or to a social communication service, such as Twitter.

The Delivery information may be specified in any way. It may include one or more telephone numbers, IP addresses, and/or URLs. It may instead include names, as illustrated in FIG. 4, which may then be translated into one or more telephone numbers, IP addresses, and/or URLs by reference to one or more other databases.

The Delivery information may in addition or instead specify that a task is be performed when the alert is triggered, such as to call and connect together the user of the mobile communication device which caused the Trigger and the user of another communication device. For example, the Delivery information may specify that the spouse of a user of the mobile communication device is to be called when the user arrives at a supermarket, so that the spouse may provide a current list of groceries which should be purchased. Another Delivery option may cause the mobile communication device 301 to phone a friend when arriving at and/or leaving the friend's location. A still further Delivery option may send a message to a social networking system, such as Twitter, announcing the user's arrival at and/or departure from a particular location. A still further Delivery option may make cause a change to be made a user's on-line account upon arrival at and/or departure from a location.

The communication system 203 may be configured to receive multiple alert requests for each mobile communication device. The memory system 207 may be configured to store the alert request information associated with each in the database within the memory system 207. The processing system 205 may be configured to check each entry in the database in the memory system 207 for a particular mobile communication device to see if it matches the current location.

When the communication system 203, the processing system 205, and/or the processing system 305 include software, that software may include one or more algorithms configured to cause its associated system to perform the functions of that system which are described herein. The software may be stored in the form of computer-readable instructions on computer-readable storage media, such as on one or more of RAMs, ROMs, PROMs, ePROMs, flash memories, hard disk, DVDs, and/or CDs.

The components, steps, features, objects, benefits and advantages that have been discussed are merely illustrative. None of them, nor the discussions relating to them, are intended to limit the scope of protection in any way. Numerous other embodiments are also contemplated. These include embodiments that have fewer, additional, and/or different components, steps, features, objects, benefits and advantages. These also include embodiments in which the components and/or steps are arranged and/or ordered differently.

Unless otherwise stated, all measurements, values, ratings, positions, magnitudes, sizes, and other specifications that are set forth in this specification, including in the claims that follow, are approximate, not exact. They are intended to have a reasonable range that is consistent with the functions to which they relate and with what is customary in the art to which they pertain.

All articles, patents, patent applications, and other publications which have been cited in this disclosure are hereby incorporated herein by reference.

The phrase "means for" when used in a claim is intended to and should be interpreted to embrace the corresponding structures and materials that have been described and their equivalents. Similarly, the phrase "step for" when used in a claim is intended to and should be interpreted to embrace the corresponding acts that have been described and their equivalents. The absence of these phrases in a claim mean that the claim is not intended to and should not be interpreted to be limited to any of the corresponding structures, materials, or acts or to their equivalents.

Nothing that has been stated or illustrated is intended or should be interpreted to cause a dedication of any component, step, feature, object, benefit, advantage, or equivalent to the public, regardless of whether it is recited in the claims.

The scope of protection is limited solely by the claims that now follow. That scope is intended and should be interpreted to be as broad as is consistent with the ordinary meaning of the language that is used in the claims when interpreted in light of this specification and the prosecution history that follows and to encompass all structural and functional equivalents.

## Claims

1. An alert communication system for providing alerts comprising:
a communication system configured to:
receive alert requests to issue alerts, each alert request including alert information identifying:
a mobile communication device; and
a location at which an alert is to be issued when the mobile communication device is at the location;
receive location reports from mobile communication devices, each location report including current location information identifying:
the mobile communication device; and
the current location of the mobile communication device; and
issue alerts;
a memory system configured to store the alert request information in a database;
a processing system configured to:
receive the current location information;
query the database in the memory system to determine whether the current location of a mobile communication device matches a location for the mobile communication device in the database; and
direct the communication system to issue an alert if the query results in a match.

2. The alert communication system for providing alerts of claim 1 wherein the communication system is configured to receive alert requests
from mobile communication devices; and/or
through a web interface; and/or
through the public switched telephone network ("PSTN").

3. The alert communication system for providing alerts of claim 1 or 2 wherein the alert information which identifies a location includes information indicative of
a street address; and/or
a latitude and longitude; and/or
a name of the location.

4. The alert communication system for providing alerts of any one of the preceding claims wherein:
the alert information which identifies a location includes information indicative of a name which is associated with more than one location; and
the processing system is configured to determine that there is a match in the database when the current location of a mobile communication device matches any of the locations associated with the name.

5. The alert communication system for providing alerts of any one of the preceding claims wherein the processing system is configured to determine that there is a match in the database when the current location of the mobile communication device is within a predetermined distance of a location for the mobile communication device in the database.

6. The alert communication system for providing alerts of any one of the preceding claims wherein the processing system is configured to direct the communication system to issue an alert when a mobile communication device
arrives at a location for the mobile communication device in the database; and/or
leaves a location for the mobile communication device in the database.

7. The alert communication system for providing alerts of any one of the preceding claims wherein the alert information identifies a set of mobile communication devices and a location at which an alert is to be issued when any of the mobile communication devices in the set are at the location.

8. The alert communication system for providing alerts of any one of the preceding claims wherein:
the communication system is configured to:
receive alert requests which include alert information specifying alert delivery information about each alert; and
issue alerts in accordance with the alert delivery information; and
the processing system is configured to direct the communication system to issue each alert in accordance with the alert delivery information in the database for that alert.

9. The alert communication system for providing alerts of claim 8 wherein the alert delivery information specifies delivering the alert
to the mobile communication device which is the subject of the alert; and/or
to a device other than mobile communication device which is the subject of the alert; and/or
audibly to a telephone number; and/or
as an e-mail; and/or
as a text message; and/or
to multiple recipients; and/or
in a manner which causes the alert to be posted to a communication system accessible to multiple persons.

10. The alert communication system for providing alerts of any one of the preceding claims wherein the communication system is configured to:
receive alert requests which include alert information specifying multiple persons that are to be connected together when the alert is issued; and
connect the multiple persons together.

11. The alert communication system for providing alerts of any one of the preceding claims wherein the communication system is configured to receive multiple alert requests for each mobile communication device and the memory system is configured to store the alert request information associated with each in the database.

12. A mobile communication device comprising:
a wireless communication system configured to wirelessly communicate with other communication systems;
a location sensing system configured to sense the current location of the mobile communication device; and
a processing system configured to cause the wireless communication system to repeatedly deliver location reports to an alert communication system for providing location-triggered alerts without user intervention between each location report, each location report including current location information identifying:
the mobile communication device; and
the current location of the mobile communication device.

13. The mobile communication device of claim 12 wherein the processing system is configured to cause the wireless communication system to deliver the location reports periodically.

14. The mobile communication device of claim 12 or 13 wherein the processing system is configured to cause the wireless communication system to deliver the location reports in response to changes in the current location.

15. The mobile communication device of any one of claims 12 to 14 wherein the processing system is configured to cause the wireless communication system to deliver alert requests to the alert communication system for providing location-triggered alerts, each alert request including alert information identifying:
the mobile communication device; and
a location at which an alert is to be issued when the mobile communication device is at the location.
